(19)

Europäisches
Patentamt
European
Patent Office
Office européen
des brevets

(11) **EP 1 887 037 A1**

(12) **EUROPEAN PATENT APPLICATION**

(43) Date of publication:
**13.02.2008 Bulletin 2008/07**

(51) Int Cl.:
*C08L 9/08* *(2006.01)*    *C08F 236/10* *(2006.01)*
*C08F 2/38* *(2006.01)*    *C08J 9/30* *(2006.01)*

(21) Application number: **06016696.4**

(22) Date of filing: **10.08.2006**

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK YU**

(71) Applicant: **PolymerLatex GmbH
45772 Marl (DE)**

(72) Inventors:
• **Scholten, Christoph
45879 Gelsenkirchen (DE)**
• **Siepen, Katja
45678 Marl (DE)**

(74) Representative: **Polypatent
Postfach 40 02 43
51410 Bergisch Gladbach (DE)**

(54) **Latex with reduced odour**

(57)    The present invention refers to a polymer latex made by free-radical polymerization comprising polymer particles containing structural units derived from at least one conjugated diene monomer and at least one aromatic vinyl monomer, whereby the polymer latex is polymerized in the presence of at least one chain transfer agent having the general formula RSH, wherein R is a linear alkyl group having 3 to 20 carbon atoms and the polymer latex has a Mooney viscosity measured according to DIN 53 523 of 85 to 155, as well as to articles made there from.

**Description**

The present invention is directed to a latex with reduced odour which can be converted to a latex foam, latex sealings or latex film having reduced odour as well. Moreover, the present invention is directed to a method for making the same.

In the art there is an increasing demand for latices having reduced odour. This is relevant for many applications, e.g. the use of latex as latex foam used for pillows or latex sealings used for conserving food.

All of these applications have in common that the latex used has to be low in odour because otherwise the odour of said product is not acceptable to a customer.

However, a latex and articles manufactured therefrom have to fulfill specific mechanical and physical properties. All of these properties are obtained by adjusting the ratio of monomers used in polymerization to the specific properties which should be obtained. Additionally specific additives are present during polymerization which for instance improve the physical properties of the product. In case of latex foams the latex has to provide particular physical properties suitable for processing conditions commonly used. The same applies to sealings made of latex because, for instance in manufacturing cans the equipment used for filling cans cannot be adjusted easily to specific requirements of any latex.

In polymerization commonly *tert*-dodecyl mercaptan is used as regulator. By adding said regulator the specific mechanical and physical properties of the latex are adjusted. However, mercaptans are sulfur-containing compounds and said mercaptans have a very bad smell since they stink.

Mercaptans used as regulator in polymerization reactions also have a very high boiling point so that it is not possible to remove said regulators from the obtained latex by customary separation methods. Mercaptans used as regulators in the polymerization reaction maintain in the final product.

Besides the bad smell of *tert*-dodecyl mercaptan the final product is not unhealthy because of said compound.

However, there are applications where the final product has to be free from smell.

In the US 6,818,236 B2 an SBR latex used for manufacturing chewing gum is disclosed. The chewing gum SBR is polymerized by using styrene and 1,3-butadiene as monomers. The copolymerization can be conducted in the presence of *n*-dodecyl mercaptan as chain transfer agent to reduce the molecular weight of the SBR. Moreover, the amount of *n*-dodecyl mercaptan used should be low enough that it is totally depleted by the time the copolymerization is short-stopped.

Short-stopping of the monomer conversion is conducted at about 65% to about 70% conversion rate. Preferably a reducing agent is used for short-stopping the monomer conversion.

The Example of US 6,818,236 is directed to an experimental SBR latex. *N*-dodecyl mercaptan was charged into the reactor as chain transfer agent. After recovering and drying the SBR latex the obtained latex film had a Mooney viscosity of 80.

According to the teaching of US 6,818,236 the synthesized SBR is low of odour and low in taste because of the fact that it is essentially void of sulfur-containing compounds. This means that according to the teaching of said US patent the amount of sulfur-containing chain transfer agents has to be minimized whereas it is advantageous to short-stop the polymerization reaction at a very low conversion rate. The freedom from odour and taste is not correlated with the use of *n*-dodecyl mercaptan as chain transfer agent. A person skilled in the art can derive from the teaching of US 6,818,236 only that the amount of sulfur-containing chain transfer agent has to be minimized. US 6,818,236 also refers to a completely different technological background since a latex used for soft chew applications has to have completely different properties compared with a latex used for manufacturing latex foams or latex sealings.

Moreover, a latex used for manufacturing latex foams or latex sealings should preferably have a high solids content and a broad particle size distribution. Furthermore, a solid rubber cannot be processed without using organic solvents, which contribute to VOC and may cause odour.

The latex for the manufacture of latex foam and can sealing may contain a suitable reinforcing latex beneath a base latex known to the persons skilled in the art.

The technical problem underlying the present invention is the provision of a superior latex useful for manufacturing latex foam, latex sealings or latex films, whereby the obtained latex is low in odour and can be used for manufacturing the aforementioned articles without changing further properties of the latex.

The technical problem underlying the present invention is solved by a polymer latex made by free-radical polymerization comprising polymer particles containing structural units derived from at least one conjugated diene monomer and at least one aromatic vinyl monomer, whereby the polymer latex is polymerized in the presence of at least one chain transfer agent having the general formula RSH, wherein R is a linear alkyl group having 3 to 20 carbon atoms and the polymer latex has a Mooney viscosity measured according to DIN 53 523 of 85 to 155.

The Mooney viscosity is measured according to DIN 53 523. In order to measure the Mooney viscosity the polymer latex is dried and subsequently added to the viscosimeter. The measurement of the viscosity is conducted at a temperature of 100°C.

In a preferred embodiment the conjugated diene monomer is selected from the group consisting of 1,3-butadiene, 2-chloro-1,3-butadiene, isoprene, conjugated straight-chain and branched pentadienes and hexadienes and combinations thereof.

In a further preferred embodiment the aromatic vinyl monomer is selected from the group consisting of styrene, $\alpha$-methyl styrene, 4-methyl-styrene, $\alpha$-chloro styrene, 4-chloro styrene, divinylbenzene, 4-methoxy-3-methylstyrene, 3,4-dimethyl-$\alpha$-methylstyrene and combinations thereof.

Preferably the latex comprises 5-40 wt-% aromatic vinyl monomer based on the total weight of the polymer particles present in the latex. In a further preferred embodiment 10-35 wt-% aromatic vinyl monomer, even more preferred 15-35 wt-% aromatic vinyl monomer and most preferred 20-30 wt-% aromatic vinyl monomer based on the total weight of the polymer particles are present in the latex.

In a further preferred embodiment the latex comprises 95-60 wt-% conjugated diene monomer based on the total weight of polymer particles present in the latex. In a further preferred embodiment 90-65 wt-% conjugated diene monomer, even more preferred 85-65 wt-% conjugated diene monomer and most preferred 80-70 wt-% conjugated diene monomer based on the total weight of the polymer particles are present in the latex.

Preferably the latex polymer does not comprise structural units based on acrylic acid and preferably does not comprise structural units based on ($\alpha$,$\beta$)-unsaturated monocarboxyclic acids. In a further preferred embodiment the latex polymer does not comprise structural units based on unsaturated monocarboxyclic acids and/or does not comprise carboxylic groups. Preferably, the aforementioned structural units are not present within the polymer chains of the polymerized latex particles.

In a further preferred embodiment the linear alkyl group R of the chain transfer agent RSH is selected form an alkyl group having 3, 4, 5, 6, 7, 8, 9, 10, 11, 12, 13, 14, 15, 16, 17, 18, 19 or 20 carbon atoms, whereby n-octyl mercaptan, *n*-decyl mercaptan and *n*-dodecyl mercaptan are preferred, *n*-decyl mercaptan and *n*-dodecyl mercaptan are more preferred and *n*-dodecyl mercaptan is preferably preferred as chain transfer agent.

The solid content of the latex is preferably of from 55% to 85%, even more preferred of from 60% to 80%, and most preferred of from 60% to 75%.

In a further preferred embodiment the Mooney viscosity is 90 to 155, preferably 90 to 150, more preferably 95 to 145, most preferred 100 to 145, even more preferred 105 to 145, preferably 105 to 140, even more preferred 110 to 135, preferably 115 to 130 and most preferred 120 to 130.

The polymer particles preferably have a single glass transition temperature ($T_g$) from -75 to -25 °C, more preferably from -60 to -40 °C measured according to the differential scanning calorimetry (DSC DIN53765).

For the polymerization of the latex the required amounts of monomers are preferably initially introduced and emulsified in the aqueous phase by continuous vigorous stirring. After a matched amount of initiator is introduced to start a batch reaction remaining amounts of initiator may be metered into the reactor later on. It is also possible to add the monomers in a feed process and emulsify them in the aqueous phase by continuous vigorous stirring. Appropriate amounts of initiator and emulsifier are also added in the feed process. Monomer can be added in the same manner also as an aqueous emulsion.

The polymer latex is preferably stabilized using the customary fatty acid soaps and/or rosin soaps which lead to dispersions having increased pH values of between 8 and 12, depending on the alkalinity of these emulsifiers. The polymerization reaction can be conducted at these pH values. The content of emulsifier is preferably between 0.5 and 8 wt-%, based on the total amount of monomers and even more preferred of from 2 to 7 wt-%.

Preferably 0.01 to 2 wt-% of free radical initiators based on the total amount of monomers present are used for starting the polymerization reaction. Preferably all soluble and all water-soluble azo initiators, peroxides, hydroperoxides and peroxidisulfates are suitable for this purpose. In the polymerization at relatively high temperatures peroxidisulfates are preferably used. In a further preferred embodiment polymerization can be effected at low temperature by using peroxides and hydroperoxides in combination with a suitable reducing agent. Suitable reducing agents are, for example, sodium formaldehyde sulfoxylate and ascorbic acid derivatives, preferably also in combination with an iron-II-salt. The polymerization temperature preferably is between 0°C and 90 °C depending on the initiator system. Preferably the temperature is between 60°C and 90°C when a peroxidisulfate initiator is used, and between 0°C and 50°C when a redox initiator system is used for starting the polymerization reaction.

Preferably the median particle diameter of the volume distribution of the obtained latex after polymerization is between 40 and 750 nm, preferably between 40 and 200 nm measured according to the capillary hydrodynamic fractionation method (CHDF).

The increase in particle size can preferably be achieved by freeze agglomeration, mechanical agglomeration, and chemical agglomeration, i.e. addition of electrolyte, hydrophilic polymer or colloids. After such treatment the median particle diameter of the volume distribution is preferably between 200 nm and 750 nm.

The surface tension of the final polymer latex is preferably in the range from 30 to 50 mN/m, preferably the viscosity of the obtained polymer latex is below 2500 mPas and the pH value of the obtained latex preferably is in the range of 8 to 12.

The aqueous rubber dispersion according to the present invention is also used for making a latex foam, sealings etc.

Thus, the present invention relates also to a process for making a latex foam by

a) compounding the polymer latex of the present invention into a foamable and vulcanizable latex compound;
b) foaming the vulcanizable latex compound;
c) filling the foam obtained in step b) into a mould of desired shape;
d) stabilizing the foam structure;
e) vulcanizing the foam; and
f) removing the vulcanized latex foam from the mould.

In order to compound the rubber dispersion of the present invention into a foamable and vulcanizable latex compound the dispersion is preferably mixed with emulsifiers, thickening agents and a vulcanizing paste as known by a person skilled in the art.

Emulsifiers are added to the rubber dispersion of the present invention in order to increase its mechanical and chemical stability and to facilitate foaming of the rubber dispersion. Anionic, cationic or non-ionic surfactants can be chosen depending on the process requirements whereby anionic surfactants are preferred for foaming applications. Preferred anionic surfactants are fatty acid soaps, fatty alcohol sulfonates and alkylaryl or aralkyl sulfonates, succinates and amido sulfosuccinates. Particularly preferred are alkali metal and ammonium salts of fatty acids and rosin acids and combinations thereof, most prefered are alkali metal salts of fatty acids and rosin acids and combinations thereof.

The vulcanization paste, preferably employed in the foaming process of the present invention, comprises sulfur or sulfur compounds, zinc oxide, vulcanization accelerators and customary additives, like antiaging agents or surfactants. Examples of suitable sulfur compounds are described in D.C. Blackley, High Polymer Latices, Vol. 1 1966, pages 69-72.

Suitable vulcanization accelerators are described in D.C. Blackley, High Polymer Latices, Vol. 1 1966, pages 73-86, and in Encyclopedia of Polymer Science and Engineering, Vol. 14, John Wiley & Sons, pages 719-746 (1985).

Suitable antiaging agents are described in D.C. Blackley, High Polymer Latices, Vol. 1 1966, pages 86-89.

The vulcanization pastes are suitably applied in amounts of 3-15 weight percent, preferably 4-12 weight percent, and most preferred 4-10 weight percent, based on the weight of the solids of the rubber dispersion.

The thus obtained foamable and vulcanizable latex compound can be processed by any process known to the person skilled in the art for making foamed articles.

Preferably the foamable and vulcanizable latex compound is processed by the Dunlop process or the Talalay process, whereby the Dunlop process is most preferred.

In case the foamed article is prepared according to the Dunlop process an appropriate amount of gelling agent is added to the readily mixed vulcanizable latex compound. The quantity of the gelling agent will depend on the desired pot life of the foamable compound which should be advantageously adjusted to be 5 - 20 minutes. Preferably according to the Dunlop process an aqueous sodium silicofluoride dispersion is used as gelling agent. The compound can be first foamed and then the gelling agent is added and foaming is continued to obtain a homogeneous distribution of the gelling agent within the foam, the desired foam density, as well as the desired foam structure. Alternatively, after the addition of the gelling agent the compound is foamed immediately using mechanical means in a way to prepare a stable foam of the desired foam density. Thereafter the foamed latex compound is filled into the mould of desired shape. Usually closed moulds are used but in some cases, for example shoe soles, open moulds can be employed.

According to the Dunlop process the foam structure in the mould is stabilized by gelling the latex foam at elevated temperatures. Thereafter the moulds are heated, in case of closed moulds preferably in saturated steam, to vulcanize the latex foam. After vulcanization the latex article is removed from the mould and if necessary washed and dried.

Alternatively the Talalay process may be employed to prepare the latex foams according to the present invention. In the Talalay process the vulcanizable latex compound is first prefoamed to give a foam with relatively high density and then poured into the moulds. The closed moulds are then evacuated whereby the latex compound foams to the finally desired density due to the vacuum applied and thus fills the mould completely. By cooling the mould to approximately -30°C the foam structure is stabilized. Thereafter carbon dioxide is lead into the mould to pressurize the mould whereby at the same time the pH of the frozen foamed latex compound is lowered resulting in gelling. The foam then may be thawed without changing its structure and the mould is heated in stages up to 110°C to vulcanize the latex foam. After complete vulcanization the article is removed from the mould, optionally washed and dried.

The foamed articles of the present invention may be used for mattresses, pillows, neck rests, toppers, shock absorbers, shaped parts of shoes, shoe inside soles, garments padding, protectors for sportswear, athletic implements, bike saddles, motorbike saddles, furniture upholstery material, bumpers, automotive dashboards and carpets.

A further object of the present invention is a method for making a latex sealing by

a) compounding the polymer latex of the present invention,
b) applying the latex compound to a metal substrate (like for example can ends), and

c) drying and vulcanizing the compound.

The can sealing compound should have no impact on the odour and flavour properties of the contents (food and drinks) of the can and serves to protect the contents from gases (oxygen) and bacterial intrusion from outside as well as gas loss (carbon dioxide) from inside. The compound has to be mechanically stable during the compounding and processing and has to exhibit good adhesion properties on metal during the can closing and life cycle of the can. One example of a can sealing compound is given below:

**CAN SEALING COMPOUND**

| | Compounding ingredients | Amount (parts by weight) |
|---|---|---|
| a. | High solid SBR latex, 67% | 149.3 |
| b. | demineralized water | 20.0 |
| | Lavoral 150, 20 % (1) | 5.0 |
| c. | china clay | 120.0 |
| | baryte | 30.0 |
| d. | vulcanisation paste: | |
| | Zincoxide RS (2) | 8.0 |
| | Vulkacit Thiuram (3) | 2.0 |
| | colloidal sulfur 95    26.0 | 2.0 |
| | Tamol NN 9104 100 % (4) | 1.3 |
| | demineralized water | 12.7 |
| e. | Vulkasil A 1 dispersion, 30 % (5) | 50.0 |
| f. | Walocel MT 4000 GB, 5 % (6) | 50.0 |

Manufactures:
(1) Lavoral 150 Bayer Chemicals, Leverkusen
(2) Zincoxide RS Grillo Werke AG, Goslar
(3) Vulkacit Thiuram Bayer MaterialScience AG, Leverkusen
(4) Tamol NN 9104 BASF
(5) Vulkasil A 1 Bayer MaterialScience AG, Leverkusen
(6) Walocel MT 4000 Wolff Walsrode AG, Walsrode

The ingredients are added to the compound in the mentioned sequence a-f under continuous stirring with a low shear equipment.

Moreover, the present invention is directed to an article comprising an aforementioned latex sealing and/or latex film obtained from the aforementioned latex. The article preferably is selected from can sealings and adhesives.

Surprisingly the latex of the present invention leads to polymer latices and articles manufactured thereof which are very low in odour. Surprisingly the mechanical properties of the latex and the products manufactured therefrom are not affected. The latex can be used in any customarily used manufacturing process.

The present invention is exemplified by the following examples.

**EXAMPLES**

Measuring methods

The following measuring methods were used to determine the physical parameters of the rubber dispersion of the present invention, as well as of the latex foam. The glass transition temperature Tg, the particle size distribution PSD, the odour and the mechanical data of the foam are measured as follows. All data given within the entire specification including the claims are measured in accordance with the detailed description given below. Thus the description of the measuring methods is not restricted to the examples only.

1. Glass transition temperature

The glass transition temperature was measured according to DIN 53765. A traditional DSC system is used (Perkin Elmer Pyris 6 DSC). The sample is dropped into a pan. Then the sample and the empty reference pan are placed into the DSC oven. The DSC oven is closed and the temperature program for the sample preparation is started. The program starts at 30°C. The heating rate is 20 K/min. The maximum temperature is 160 °C which is held for 10 min. The sample is cooled down to -20 °C and again heated to 20°C. Afterwards the DSC measuring is started. The temperature program starts at -70 °C. The heating rate is 20 K/min. The maximum temperature is 180°C. Finally the oven is cooled to room temperature again. The raw data is collected and processed with the Pyris TA Manager Software.

2. Particle Size Distribution

The particle size distribution is measured on the Particle Size Distribution Analyzer from PolymerLaboratories. The diluted latex sample under investigation and a small molecule marker solution are introduced into the system via a two position, electrically actuated valve, such that the eluent flow is not interrupted. The sample components are separated by an HDC mechanism in a "cartridge", and their concentration is measured by a UV detector. The system is calibrated using a series of particle size standards.

3. Mooney-Viscosity

The Mooney-viscosity is measured according to the DIN 53523. For the coagulation of the latex 250 g of the latex with 30 % total solids are required. 50 ml of sodium chloride solution (25 %) is added to the stirred latex. Then 250 ml of a Wingstay L / Ethanol solution (0,75%) are added within 30 seconds. Furthermore, 10 ml of sulfuric acid (18 %) are dropped into the latex. The coagulate and the serum is filtered through a 200 $\mu$m Monodur cloth. The residual water is squeezed out and the polymer clump is reduced to small pieces. Those are washed with 1 I of demineralised water. The polymer is again squeezed, reduced into small pieces (1-2 cm) and dried for 2 h at 105°C. The dried rubber pieces are then pressed free of blow holes and cut into the specimen. The measurement is performed at 100 °C with a previous heating time of 1 min and a measuring time of 4 min and a rotor speed of 2 rpm (large rotor).

4. Informal Sensory Test

Samples are sensory evaluated in an informal way by experienced staff not having obtained on forehand any information about the samples. Odour scores are given using a scale from 1-5 (0=no odour, 1=just noticeable, 5=very strong).

5. GC Sniffing Test

The volatiles are extracted from the sample by a combined steam distillation and extraction method (so-called Likens and Nickerson method, see "Handbuch der Aroma Forschung" H.Maarse and R.Belz, Akademie Verlag, Berlin, 1981). 25 g of sample is mixed with 500 ml water and anti-foam (1 ml Dow Corning® RD) is added. Extraction time is 2 hours. As solvent a mixture of pentane and ether (2:1) is used. The solvent phase is dried and concentrated on a water bath to 0.5 ml using a Vigreux column.
Concentrated extracts are analysed with GC-sniff-MS (Agilent 5973 GC-MS). 1.5 $\mu$l extract is injected splitless on a 30 m capillary column DB-5MS. Diameter 0.25 mm, film 1$\mu$m. Oven temperature program 0 °C (1 min), 10 °C/min to 320°C (2 min). The end of the column is connected to a splitter which leads approx 50 % of the effluent to a sniff port and the other part to the MS detector. At the sniff port the effluent is mixed with humidified air.
The sniffing is performed by one person who notes the descriptions of the odours observed at the port with the corresponding retention times (no chromatograms are shown during sniffing). The odours are scored from weak to strong (0=no odour, 1=just noticeable, 5=very strong).

6. Mechanical Data of the latex foam

389.6 g of the aqueous reinforced rubber dispersion were weighted together with 10.8 g potassium oleate as 17.5% aqueous solution, 24.5 g of sodium carboxyl methyl cellulose solution 2.5% in water (Blanose NA-CMC Type 12M 31 P available from Hercules GmbH) and 36.8 g of a 60% solid vulcanization paste Suprotex UGB, obtainable from Weserland Textilchemie, into the bowl of a Hobart Planetary Mixer (Type N50). In a separate vessel 23.1 g of 25% sodium silicofluoride dispersion in water was weighted. The aqueous reinforced rubber dispersion in the mixing bowl was foamed using the Hobart Planetary Mixer until a wet foam density of about 112 g/l was achieved that corresponds to a dry foam density of about 75 g/l.
Thereafter the sodium silicofluoride dispersion gelling agent was added and mixing was continued for 2 min to achieve homogeneous distribution of the gelling agent within the foam and a homogeneous foam structure.
The latex compound thus obtained from each composition according to the examples was filled into a 290mmx290mmx28mm mould. The mould was sealed and its content vulcanized at 100°C with saturated steam for 20 min. The vulcanized foam was removed from the mould, washed and dried for 90 min at 120°C in a forced circulation oven.

Thereafter the samples were conditioned and measured as indicated above with respect to the measuring methods. The actual foam density was measured for normalizing the hardness according to the above equation for a foam density of 75 g/dm$^3$.

The testing is performed on the tensile testing model Zwick / Z 010 from Zwick.

6.1. Elongation at break and tear strength

The elongation at break is measured in accordance with DIN EN ISO 1798. Deviating from this norm the samples are stored for 16 hours at room temperature

The dimension of the sample (Type A) and the testing speed (500 mm/min) remain unchanged.

6.2. Hardness

The hardness of the latex foam is measured in accordance with DIN EN ISO 2439, following the method according to process A - determination of indentation hardness index. Conditioning of the samples was performed as follows.

This method was followed with the following exceptions. After preparation the samples were stored at room temperature for 16 h. The sample dimensions have been altered to have a square shape with an edge length of 280 $\pm$ 2 mm and a sample thickness of 30 $\pm$ 2 mm.

The hardness is normalized to a hardness at 75 g/dm$^3$ according to the following equation:

$$A_{75} = \frac{148{,}239}{0{,}0099\ \sigma^2 + 2{,}1575\ \sigma - 69{,}261} \cdot A_x$$

whereby $A_x$ is the measured hardness as obtained according to the method described above and σ is the actual density of the measured foam given in g/dm$^3$.

6.4. Hysteresis

Hysteresis is measured in accordance with DIN EN ISO 3386 with the following alterations. Square shape with an edge length of 60 $\pm$ 2 mm and a thickness of 30 $\pm$ 2 mm.

Hysteresis is measured on two samples instead of three, and the samples are stored for 16 h at room temperature.

Comparative Example 1: Polymer Latex with *tert.*-dodecyl mercaptan as modifier:

The reactor is charged with a solution of 29.3 g potassium oleate, 3.75 g potassium chloride and 0.73 g naphthalene sulfonic acid formaldehyde condensate, sodium salt in 1241.5 g deionized water. 324.8 g styrene and 1.64 g *tert*-dodecyl mercaptan are added. The reactor is pressed with nitrogen and evacuated. The mixture is cooled to 15 °C. 0.56 g *p*-menthane hydroperoxide is added, followed by 34.5 g deionized water. A solution of 0.59 g sodium formaldehyde sulfoxylate, 0.12 g ethylenediamine tetraacetic acid and 0.06 g iron(II) sulfate heptahydrate in 33.18 g deionized water is added, followed by 34.5 g deionized water. The reactor temperature is increased to 50 °C within 3 hours and then kept constant. Then a solution of 0.29 g *p*-menthane hydroperoxide and 1.68 g potassium oleate in 23.0 g deionized water is added at time 3 hours for two hours at a feeding rate of 25.0 g/hour. The reaction is stopped at a conversion of 60 to 80 %. At the end of the polymerisation a solution of 0.61 g potassium chloride, 6.29 g naphthalene sulfonic acid formaldehyde condensate, sodium salt and 0.42 g N,N-diethylhydroxyamine in 32.8 g deionized water is added, followed by 23.0 g deionized water.

A solution of 1.16 g polyethylene oxide (prepared according to the teaching of DE 1 213 984) and 0.06 g ethylenediamine tetraacetic acid in 2.54 g is added, followed by 46.0 g deionized water. After 3 hours a solution of 4.12 g potassium oleate, 0.03 g potassium chloride and 0.36 g naphthalene sulfonic acid formaldehyde condensate, sodium salt in 21.7 g deionized water, followed by 46.0 g of deionized water. Finally the latex has a solids content of ca. 31 %. The latex is then concentrated under stirring and nitrogen atmosphere in a water bath at 70 °C to a solid content of ca. 67 %.

Comparative Example 2: polymer Latex without chain transfer agent (modifier):

The reactor is charged with a solution of 26.8 g potassium oleate, 3.75 g potassium chloride and 0.73 g naphthalene sulfonic acid formaldehyde condensate, sodium salt in 1247.8 g deionized water. 324.8 g styrene are added. The reactor is pressed with nitrogen and evacuated. The mixture is cooled to 15 °C. 0.56 g $p$-menthane hydroperoxide is added, followed by 34.5 g deionized water. A solution of 0.59 g sodium formaldehyde sulfoxylate, 0.12 g ethylenediamine tetraacetic acid and 0.06 g iron(II) sulfate heptahydrate in 33.18 g deionized water is added, followed by 34.5 g deionized water. The reactor temperature is increased to 25 °C within 3 hours and then kept constant. Then a solution of 0.76 g $p$-menthane hydroperoxide and 4.19 g potassium oleate in 28.8 g deionized water is added at time 1 hour for 4 hours at a feeding rate of 8.42 g/hour. The reaction is stopped at a conversion of 60 to 80 %. At the end of the polymerisation a solution of 0.61 g potassium chloride, 6.29 g naphthalene sulfonic acid formaldehyde condensate, sodium salt and 0.42 g N,N-diethylhydroxyamine in 32.8 g deionized water is added, followed by 23.0 g deionized water.
A solution of 1.16 g polyethylene oxide (prepared according to the teaching of DE 1 213 984) and 0.06 g ethylenediamine tetraacetic acid in 2.54 g is added, followed by 46.0 g deionized water. After 3 hours a solution of 4.12 g potassium oleate, 0.03 g potassium chloride and 0.36 g naphthalene sulfonic acid formaldehyde condensate, sodium salt in 21.7 g deionized water, followed by 46.0 g of deionized water. Finally the latex has a solids content of ca. 30 %.
The latex is then concentrated under stirring and nitrogen atmosphere in a water bath at 70 °C to a solid content of ca. 67 %.

Example 1: Polymer Latex with $n$-dodecyl mercaptan as modifier:

The reactor is charged with a solution of 29.3 g potassium oleate, 3.75 g potassium chloride and 0.73 g naphthalene sulfonic acid formaldehyde condensate, sodium salt in 1241.5 g deionized water. 324.8 g styrene and 1.64 g $n$-dodecyl mercaptan are added. The reactor is pressed with nitrogen and evacuated. The mixture is cooled to 15 °C. 0.56 g $p$-menthane hydroperoxide is added, followed by 34.5 g deionized water. A solution of 0.59 g sodium formaldehyde sulfoxylate, 0.12 g ethylenediamine tetraacetic acid and 0.06 g iron(II) sulfate heptahydrate in 33.18 g deionized water is added, followed by 34.5 g deionized water. The reactor temperature is increased to 50 °C within 3 hours and then kept constant. Then a solution of 0.29 g p-menthane hydroperoxide and 1.68 g potassium oleate in 23.0 g deionized water is added at time 3 hours for two hours at a feeding rate of 25.0 g/hour. The reaction is stopped at a conversion of 60 to 80 %. At the end of the polymerisation a solution of 0.61 g potassium chloride, 6.29 g naphthalene sulfonic acid formaldehyde condensate, sodium salt and 0.42 g N,N-diethylhydroxyamine in 32.8 g deionized water is added, followed by 23.0 g deionized water.
A solution of 1.16 g polyethylene oxide (prepared according to the teaching of DE 1 213 984) and 0.06 g ethylenediamine tetraacetic acid in 2.54 g is added, followed by 46.0 g deionized water. After 3 hours a solution of 4.12 g potassium oleate, 0.03 g potassium chloride and 0.36 g naphthalene sulfonic acid formaldehyde condensate, sodium salt in 21.7 g deionized water, followed by 46.0 g of deionized water. Finally the latex has a solids content of ca. 31 %.
The latex is then concentrated under stirring and nitrogen atmosphere in a water bath at 70 °C to a solid content of ca. 67 %.

Example 2: Polymer Latex with $n$-dodecyl mercaptan as modifier:

The reactor is charged with a solution of 29.3 g potassium oleate, 3.75 g potassium chloride and 0.73 g naphthalene sulfonic acid formaldehyde condensate, sodium salt in 1241.5 g deionized water. 324.8 g styrene and 2.46 g $n$-dodecyl mercaptan are added. The reactor is pressed with nitrogen and evacuated. The mixture is cooled to 15 °C. 0.56 g $p$-menthane hydroperoxide is added, followed by 34.5 g deionized water. A solution of 0.59 g sodium formaldehyde sulfoxylate, 0.12 g ethylenediamine tetraacetic acid and 0.06 g iron(II) sulfate heptahydrate in 33.18 g deionized water is added, followed by 34.5 g deionized water. The reactor temperature is increased to 50 °C within 3 hours and then kept constant. Then a solution of 0.29 g p-menthane hydroperoxide and 1.68 g potassium oleate in 23.0 g deionized water is added at time 3 hours for two hours at a feeding rate of 25.0 g/hour. The reaction is stopped at a conversion of 60 to 80 %. At the end of the polymerisation a solution of 0.61 g potassium chloride, 6.29 g naphthalene sulfonic acid formaldehyde condensate, sodium salt and 0.42 g N,N-diethylhydroxyamine in 32.8 g deionized water is added, followed by 23.0 g deionized water.
A solution of 1.16 g polyethylene oxide (prepared according to the teaching of DE 1 213 984) and 0.06 g ethylenediamine tetraacetic acid in 2.54 g is added, followed by 46.0 g deionized water. After 3 hours a solution of 4.12 g potassium oleate, 0.03 g potassium chloride and 0.36 g naphthalene sulfonic acid formaldehyde condensate, sodium salt in 21.7 g deionized water, followed by 46.0 g of deionized water. Finally the latex has a solids content of ca. 31 %.
The latex is then concentrated under stirring and nitrogen atmosphere in a water bath at 70 °C to a solid content of ca. 67 %.

Example 3: Polymer Latex with *n*-dodecyl mercaptan as modifier:

The reactor is charged with a solution of 26.8 g potassium oleate, 3.75 g potassium chloride and 0.73 g naphthalene sulfonic acid formaldehyde condensate, sodium salt in 1247.8 g deionized water. 324.8 g styrene and 3.28 g *n*-dodecyl mercaptan are added. The reactor is pressed with nitrogen and evacuated. The mixture is cooled to 15 °C. 0.56 g *p*-menthane hydroperoxide is added, followed by 34.5 g deionized water. A solution of 0.59 g sodium formaldehyde sulfoxylate, 0.12 g ethylenediamine tetraacetic acid and 0.06 g iron(II) sulfate heptahydrate in 33.18 g deionized water is added, followed by 34.5 g deionized water. The reactor temperature is increased to 25 °C within 3 hours and then kept constant. Then a solution of 0.76 g p-menthane hydroperoxide and 4.19 g potassium oleate in 28.8 g deionized water is added at time 1 hour for 4 hours at a feeding rate of 8.42 g/hour. The reaction is stopped at a conversion of 60 to 80 %. At the end of the polymerisation a solution of 0.61 g potassium chloride, 6.29 g naphthalene sulfonic acid formaldehyde condensate, sodium salt and 0.42 g N,N-diethylhydroxyamine in 32.8 g deionized water is added, followed by 23.0 g deionized water.

A solution of 1.16 g polyethylene oxide (prepared according to the teaching of DE 1 213 984) and 0.06 g ethylenediamine tetraacetic acid in 2.54 g is added, followed by 46.0 g deionized water. After 3 hours a solution of 4.12 g potassium oleate, 0.03 g potassium chloride and 0.36 g naphthalene sulfonic acid formaldehyde condensate, sodium salt in 21.7 g deionized water, followed by 46.0 g of deionized water. Finally the latex has a solids content of ca. 30 %. The latex is then concentrated under stirring and nitrogen atmosphere in a water bath at 70 °C to a solid content of ca. 67 %.

Comparative Example 1-2 and Examples 1-3:

TABLE 1

| Example Measurements | CE1 | CE2 | E1 | E2 | E3 |
|---|---|---|---|---|---|
| Latex | | | | | |
| Informal Sensory Test | | | | | |
| Sulphur-like odour | 4 | 0 | 0 | 1 | 0 |
| GC Sniffing | | | | | |
| Sulphur-like odour tr = 17.7 | 3 | 0 | 0 | 1 | 1 |
| Sulphur-like odour tr = 19.0 | 4 | 0 | 0 | 1 | 0 |
| Polymer | | | | | |
| Mooney viscosity (ML1 +4) | 131 | 157 | 142 | 133 | 101 |
| Foam | | | | | |
| Elongation at break [%] | 155 | 147 | 154 | 154 | 199 |
| Tear Strength [N/mm2] | 0.039 | 0.030 | 0.035 | 0.037 | 0.051 |
| Hardness [N] | 87 | 88 | 83 | 89 | 86 |
| Hysteresis [N/mm2] | 19.2 | 19.9 | 18.3 | 17.6 | 17.8 |

Comparative example 1 shows suitable polymer and foam but disturbing odour properties. Moreover, comparative example 2 shows unsufficient polymer and foam but the desired odour properties.

In contrast thereto, the aqueous rubber dispersions according to the present invention show the desired odour properties, i.e. the odour intensity is equal or lower than 1. At the same time the Mooney viscosity is in the desired region, namely below 155. The foam properties are matching the expectations as well.

**Claims**

1. A polymer latex made by free-radical polymerization comprising polymer particles containing structural units derived from at least one conjugated diene monomer and at least one aromatic vinyl monomer, whereby the polymer latex is polymerized in the presence of at least one chain transfer agent having the general formula RSH, wherein R is a linear alkyl group having 5 to 20 carbon atoms and the polymer latex has a Mooney viscosity measured according to DIN 53 523 of 85 to 155.

2. The polymer latex according to claim 1, **characterized in that** the conjugated diene monomer is selected from the group consisting of 1,3-butadiene, 2-chloro-1,3-butadiene, isoprene, conjugated straight-chain and branched pentadienes and hexadienes and combinations thereof.

3. The polymer latex according to claim 1 or 2, **characterized in that** the aromatic vinyl monomer is selected from the group consisting of styrene, $\alpha$-methyl styrene, 4-methyl-styrene, $\alpha$-chloro styrene, 4-chloro styrene, divinylbenzene, 4-methoxy-3-methylstyrene, 3,4-dimethyl-$\alpha$-methylstyrene and combinations thereof.

4. The polymer latex according to any of the preceding claims, **characterized in that** the latex comprises 5 to 40 weight percent aromatic vinyl monomer based on the total weight of polymer particles present in the latex.

5. The polymer latex according to any of the preceding claims, **characterized in that** the latex comprises 60 to 95 weight percent conjugated diene monomer based on the total weight of polymer particles present in the latex.

6. The polymer latex according to any of the preceding claims, **characterized in that** the latex does not comprise structural units based on acrylic acid and preferably does not comprise structural units based on $(\alpha,\beta)$-unsaturated monocarboxylic acids.

7. The polymer latex according to any of the preceding claims, **characterized in that** the polymer latex does not comprise structural units based on unsaturated carboxylic acids and/or does not comprise carboxylic groups.

8. The polymer latex according to any of the preceding claims, **characterized in that** the linear alkyl group R of the chain transfer agent RSH is selected from an alkyl group having 3, 4, 5, 6, 7, 8, 9, 10, 11, 12, 13, 14, 15, 16, 17, 18, 19 or 20 carbon atoms, whereby *n*-octyl mercaptan, *n*-decyl mercaptan and *n*-dodecyl mercaptan are preferred, *n*-decyl mercaptan and *n*-dodecyl mercaptan are more preferred and *n*-dodecyl mercaptan is preferably preferred as chain transfer agent (modifier).

9. The polymer latex according to any of the preceding claims, **characterized in that** the latex has a solids content of 55% to 85%, preferably of from 60% to 80% and most preferred of from 60% to 75%.

10. The polymer latex according to any of the preceding claims, **characterized in that** the Mooney viscosity is 90 to 150, preferably 95 to 145, most preferred 100 to 145, even more preferred 105 to 145, preferably 105 to 140, even more preferred 110 to 135, preferably 115 to 130 and most preferred 120 to 130.

11. The polymer latex according to any of the preceding claims, **characterized in that** the polymer particles have a single glass transition temperature ($T_g$) from -75 to -25°C measured according to the differential scanning calorimetry (DSC DIN 53765).

12. A method for making a latex foam by

   a) compounding the polymer latex of any of claims 1 - 11 into a foamable and vulcanizable latex compound;
   b) foaming the vulcanizable latex compound;
   c) filling the foam obtained in step b) into a mould of desired shape;
   d) stabilizing the foam structure;
   e) vulcanizing the foam; and
   f) removing the vulcanized latex foam from the mould.

13. The method of claim 12, wherein a gelling agent is added to make the foamable and vulcanizable latex compound, the foaming is solely achieved by mechanical means and the foam structure is stabilized by at least partially gelling the latex foam prior to vulcanization.

14. The method of claim 12, wherein the vulcanizable latex compound is first foamed by mechanical means and then filled into a vacuum mould, then the foam is expanded to the volume of the mould by application of vacuum, and the foam structure is stabilized by rapid cooling of the foam followed by pressurizing the mould with carbon dioxide thereby causing at least partial gelling of the foam prior to vulcanization.

**15.** An article comprising latex foam obtained from polymer latex of any of claims 1-11.

**16.** The article of any of claims 15, being selected from sealings, can sealings, carpets, mattresses, pillows, neck rests, toppers, shock absorbers, shaped parts of shoes, shoe inside soles, garments padding, protectors for sportswear, athletic implements, bike saddles, motorbike saddles, furniture upholstery material, bumpers, automotive dashboard carpets.

**17.** A method for making a latex sealing and/or latex film by

a) compounding the latex of any of claims 1 - 11,
b) applying the latex compound to a substrate.

**18.** An article comprising a latex sealing and/or latex film obtained from a latex of any of the claims 1 to 11.

**19.** The article of claim 18, being selected from sealings, can sealings and adhesives.

**European Patent Office**

# EUROPEAN SEARCH REPORT

Application Number

EP 06 01 6696

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 1 406 051 A (DUNLOP LTD) 10 September 1975 (1975-09-10) | 1-8,10, 11,17-19 | INV. C08L9/08 C08F236/10 C08F2/38 C08J9/30 |
| Y | * page 1, line 56 - line 76; table 1 * * page 2, line 22 - line 28 * ----- | 12-14 | |
| X | GB 1 546 387 A (SOUTHLAND CORP) 23 May 1979 (1979-05-23) | 1-10, 17-19 | |
| Y | * page 2, line 48 - line 53; claims * * page 3, line 63 * * page 1, line 10 - line 15 * ----- | 12-14 | |
| X | J. SCHNETGER: "Lexikon der Kautcshuktechnik, 2. Auflage" 1991, HÜTHIG BUCH VERLAG , HEIDELBERG , XP002413774 | 15,16 | |
| Y | * Schaumgummi * * page 564 - page 565 * ----- | 12-14 | |

|  | TECHNICAL FIELDS SEARCHED (IPC) |
|---|---|
|  | C08F C08L |

The present search report has been drawn up for all claims

| Place of search | Date of completion of the search | Examiner |
|---|---|---|
| The Hague | 10 January 2007 | Mettler, Rolf-Martin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**ANNEX TO THE EUROPEAN SEARCH REPORT
ON EUROPEAN PATENT APPLICATION NO.**

EP 06 01 6696

This annex lists the patent family members relating to the patent documents cited in the above-mentioned European search report.
The members are as contained in the European Patent Office EDP file on
The European Patent Office is in no way liable for these particulars which are merely given for the purpose of information.

10-01-2007

| Patent document cited in search report | | Publication date | Patent family member(s) | Publication date |
|---|---|---|---|---|
| GB 1406051 | A | 10-09-1975 | NONE | |
| GB 1546387 | A | 23-05-1979 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6818236 B2
- US 6818236 B

- DE 1213984

**Non-patent literature cited in the description**

- **D.C. BLACKLEY.** *High Polymer Latices,* 1966, vol. 1, 69-72
- **D.C. BLACKLEY.** *High Polymer Latices,* 1966, vol. 1, 73-86

- Encyclopedia of Polymer Science and Engineering. John Wiley & Sons, 1985, vol. 14, 719-746
- **D.C. BLACKLEY.** *High Polymer Latices,* 1966, vol. 1, 86-89